# FASCICULE DE BREVET EUROPEEN

(11) **EP 0 373 035 B1**
(45) Date de publication et mention de la délivrance du brevet: **24.03.1993**
(21) Numéro de dépôt: 89403299.4
(22) Date de dépôt: 28.11.1989
(51) Int. Cl.: B60R 25/02

(54) **Dispositif de verrouillage et déverrouillage d'un élément rotatif, tel que par exemple une colonne de direction de véhicule automobile**
Ent- und Verriegelungsvorrichtung für ein drehbares Element, z.B. die Lenksäule eines Kraftfahrzeuges
Locking and unlocking device for a rotatable element such as the steering column of an automotive vehicle

(30) Priorité: 06.12.1988 FR 8815978
(43) Date de publication de la demande: 13.06.1990
(73) Titulaire: AUTOMOBILES PEUGEOT, 75116 Paris (FR); AUTOMOBILES CITROEN, 92200 Neuilly-sur-Seine (FR)
(72) Inventeur: Rousseau, Michel, F-92400 Courbevoie (FR)
(74) Mandataire: Durand, Yves Armand Louis

(56) Documents cités:
- EP-A- 0 095 146
- EP-A- 0 219 002
- EP-A- 0 240 724
- WO-A-83/03580
- FR-A- 442 321

## Description

La présente invention a pour objet un dispositif de verrouillage et déverrouillage d'un élément rotatif quelconque et qui peut constituer par exemple la colonne de direction d'un véhicule automobile.

Il est déjà connu de verrouiller une colonne de direction d'un véhicule automobile à l'aide d'une serrure, appelée communément serrure antivol, actionnant un pêne pouvant pénétrer dans un trou formant gâche ménagée dans la paroi de la colonne pour la bloquer suivant une position angulaire donnée.

Ainsi, dans le document FR-A-442 321, est décrit un dispositif de blocage de colonne de direction correspondant au préambule de la revendication 1.

Par ailleurs, on connaît d'après le document EP-A-0 240 724, un dispositif de blocage d'une colonne de direction munie de manchons avec dents angulairement décalées entre lesquelles peuvent pénétrer des tenons appartenant à une plaque de blocage basculante.

La présente invention propose un dispositif permettant non seulement une augmentation des positions angulaires de blocage de la colonne sans l'affaiblir, mais aussi un fonctionnement fiable des pênes au verrouillage et au déverrouillage.

A cet effet, l'invention a pour objet un dispositif de verrouillage et déverrouillage d'un élément rotatif tel que par exemple une colonne de direction de véhicule automobile, à l'aide d'une serrure actionnant deux pênes pouvant coopérer respectivement avec des trous appartenant à deux rangées circulaires de trous ménagés dans la paroi de l'élément rotatif pour permettre le blocage de ce dernier suivant une position angulaire donnée, caractérisé en ce que lesdits trous sont angulairement décalés d'une rangée à l'autre, les trous d'une rangée étant respectivement décalés par rapport aux trous de l'autre rangée d'une distance circonférentielle d'entraxe égale à la moitié de celle de deux trous successifs de cette autre rangée.

Suivant une autre caractéristique, les deux pênes susceptibles de s'enclencher, respectivement dans un trou d'une rangée et dans un trou de l'autre rangée lors de la rotation de l'élément rotatif, sont parallèles et structurellement indépendants, mais peuvent être actionnés tous les deux au déverrouillage par un tirant et au verrouillage par des ressorts.

Selon encore une autre caractéristique, le tirant précité est muni d'un ergot ou analogue d'accrochage sur le barillet de la serrure et est constamment sollicité, de même que les deux pênes précités, par les ressorts précités.

Les deux pênes coulissent dans une pièce de guidage solidaire du corps de serrure et les ressorts qui sollicitent ces pênes sont montés entre le tirant et lesdits pênes qui comportent chacun une mutée de limitation de course coopérant avec le tirant.

Mais d'autres caractéristiques et avantages de l'invention apparaîtront mieux dans la description détaillée qui suit et se réfère aux dessins annexés, donnés uniquement à titre d'exemple, et dans lesquels :
La figure 1 est une vue en perspective d'une portion d'élément rotatif tel que par exemple une colonne de direction, avec laquelle coopère une serrure permettant le blocage en rotation de ladite colonne ; et
La figure 2 est une vue partielle et en perspective du mécanisme d'actionnement des deux pênes de la serrure.

En se reportant aux figures, on voit qu'un dispositif selon l'invention, de verrouillage et déverrouillage d'un élément rotatif, tel qu'une colonne de direction 1 tournant autour de son axe X-X′, comprend essentiellement une serrure 2 se composant essentiellement d'un corps ou cylindre 3 dans lequel tourne un barillet 4 sous l'action d'une clé (non représentée) qui commande deux pênes 5, 6 montés coulissants dans une pièce de guidage 7 solidaire du corps ou cylindre 3.

L'élément rotatif ou colonne 1 comprend deux rangées circulaires et disctinctes de trous formant gâches, à savoir une rangée circulaire de trous visibles en 10, 11 et 12 et une rangée circulaire de trous dont on ne voit que les trous 20 et 21.

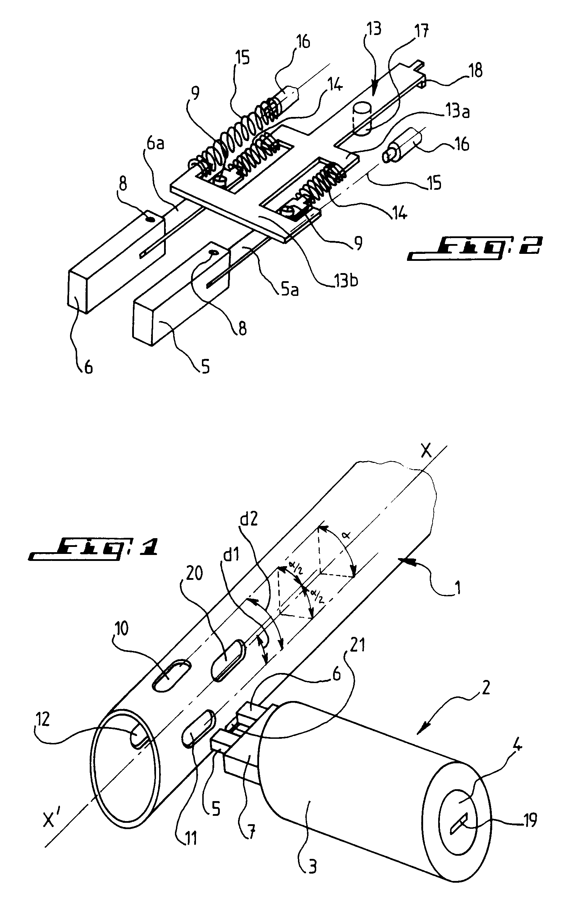

Comme on le voit bien sur la figure 1, les trous de chaque rangée sont angulairement décalés d'une rangée à l'autre de sorte que les pênes 5 et 6 peuvent coopérer respectivement et alternativement avec les trous des deux rangées, comme on l'expliquera plus loin à propos du fonctionnement.

Plus précisément, les trous, 20, 21, etc... d'une rangée sont respectivement décalés par rapport aux trous 10, 11, 12 etc... de l'autre rangée d'une distance circonférentielle d'entraxe d₁ égale à la moitié de celle d₂ de deux trous successifs 10, 11 de cette autre rangée.

Lorsque le pêne 5 est enclenché dans le trou 11, le pêne 6 portera sur la paroi de la colonne de direction 1, et lorsque le pêne 6 sera enclenché par exemple dans le trou 20, le pêne 5 portera alors sur la paroi de ladite colonne. Il suffira par conséquent que l'un des pênes 5 ou 6 soit dans un trou pour assurer le blocage, et du fait de la prévision de deux rangées de trous ainsi décalés, on comprend que l'on divise par deux l'angle de rotation de la colonne 1 entre deux positions de blocage, ce qui ne pourrait pas se faire si par exemple le trou 20 se trouvait dans la rangée de trous 10, 11, 12 entre les trous 10 et 11 par exemple, car, dans ce cas là, la colonne 1 n'aurait pas la résistance mécanique voulue dans un même plan transversal. Autrement dit, on peut réaliser, selon la présente invention, une colonne qui présente la résistance mécanique voulue dans un même plan transversal tout en doublant le nombre de positions angulaires de blocage. Cela est matérialisé sur la figure 1 par l'angle α matérialisant l'écart entre deux positions de blocage avec une serrure ou antivol à un pêne, et par les angles α/2 matérialisant l'écart angulaire des positions de blocage avec une serrure ou antivol à deux pênes selon la présente invention.

Les deux pênes 5 et 6 sont, comme on le voit mieux sur la figure 2, retenus par des queues de pêne 5a, 6a, et cela par l'intermédiaire de goupilles 8.

Chaque queue de pêne 5a, 6a est pourvue d'une butée 9 susceptible de coopérer avec une pièce formant tirant 13.

Les deux pênes 5 et 6 sont parallèles et forment chacun une structure indépendante. Toutefois, ces pênes peuvent être actionnés tous les deux au déverrouillage par le tirant 13 et au verrouillage, par des ressorts qui seront maintenant décrits.

Ces ressorts se composent d'une paire de ressorts 14 montés, comme on le voit bien sur la figure 2, entre les queues de pêne 5a, 6a et une barrette transversale 13a appartenant au tirant 13. De plus, une paire de ressorts est prévue entre des tétons 16 solidaires du corps de serrure 3 et une autre barrette transversale 13b appartenant au tirant 13 et sur laquelle peuvent prendre appui les butées 9.

On a montré en 17 un doigt solidaire du tirant 13 et qui peut coopérer avec une came en hélice (non représentée) aménagée sur le barillet 4.

L'extrémité du tirant 13 opposée à la barre transversale 13b est munie d'un ergot 18 permettant l'accrochage du tirant dans un logement (non représenté) du barillet 4.

Mais, pour une meilleure compréhension de l'invention, on expliquera ci-après comment s'effectue le verrouillage et le déverrouillage de la colonne de direction.

On partira de la position verrouillée, c'est-à-dire soit le pêne 5 est enclenché dans l'un des trous 10, 11 ou 12, et le pêne 6 porte tout simplement sur la paroi de la colonne 1, soit le pêne 6 est enclenché dans l'un des trous 20, 21, et le pêne 5 porte alors sur la colonne de direction 1.

Pour effectuer la déverrouillage, on introduit la clé dans le trou de serrure 19 ce qui permet de faire tourner le barillet 4. Le doigt 17 venant en appui sur la came en hélice du barillet 4, la rotation de ce barillet provoquera le recul du doigt 17 et donc du tirant 13. Ainsi, les queues 5a, 6a des pênes 5 et 6 reculent à l'encontre de la force des ressorts 14, 15. Il en résulte que les pênes 5 et 6 rentrent dans la pièce de guidage 7, ce qui provoque le déverrouillage de la colonne 1 qui peut donc tourner librement autour de l'axe X-X′. En fin de recul du tirant 13, l'ergot 18 vient s'accrocher dans le logement (non représenté) du barillet 4, ce qui bloque les pênes en position rentrée.

L'opération de verrouillage s'effectue comme suit.

En fin de rotation du barillet 4, la clé est libérée, et lors du retrait de la clé, l'ergot 18 est expulsé de son logement. Le barillet 4 étant en fin de rotation, la came en hélice est en position basse, de sorte que le doigt 17 ne prend pas appui sur ladite came. Les deux ressorts 15 en appui sur les tétons 16 et préalablement comprimés par le déverrouillage, poussent le tirant 13 et les pênes 5, 6 par l'intermédiaire des ressorts 14, en position sortie. Si aucun des deux pênes 5, 6 ne se trouve en face d'un trou dans la colonne, les pênes prennent appui sur la paroi de ladite colonne. Une rotation de celle-ci amène alors un trou en face de l'un des pênes qui y pénètre et verrouille ainsi la colonne. Bien entendu, l'espacement entre les deux rangées circulaires de trous dans la colonne correspond à l'écartement entre les deux pênes 5 et 6.

On a donc réalisé suivant l'invention un système de verrouillage et déverrouillage d'une colonne de direction qui utilise deux pênes espacés afin de multiplier le nombre de trous dans ladite colonne sans diminuer sa résistance. On multiplie ainsi le nombre de positions de blocage sans affaiblir la colonne, étant entendu que le dispositif selon l'invention peut être utilisé sans changement de l'encombrement actuel des colonnes et sans modification spéciale de ces colonnes autre que la prévision d'une rangée supplémentaire de trous décalés par rapport à ceux de l'autre rangée.

Bien entendu, l'invention n'est nullement limitée au mode de réalisation décrit et illustré qui n'a été donné qu'à titre d'exemple.

## Revendications

1. Dispositif de verrouillage et déverrouillage d'un élément rotatif (1) tel que par exemple une colonne de direction de véhicule automobile, à l'aide d'une serrure (2) actionnant deux pênes (5, 6) pouvant coopérer respectivement avec des trous appartenant à deux rangées circulaires de trous (10, 11, 12 ; 20, 21) ménagés dans la paroi de l'élément rotatif (1) pour permettre le blocage de ce dernier suivant une position angulaire donnée, caractérisé en ce que lesdits trous sont angulairement décalés d'une rangée à l'autre, les trous (20, 21) d'une rangée étant respectivement décalés par rapport aux trous (10, 11, 12) de l'autre rangée d'une distance circonférentielle d'entraxe (d₁) égale à la moitié de celle (d₂) de deux trous successifs (10, 11) de cette autre rangée.

2. Dispositif selon la revendication 1, caractérisé en ce que les deux pênes précités (5, 6) susceptibles de s'enclencher respectivement dans un trou d'une rangée et dans un trou de l'autre rangée lors de la rotation de l'élément rotatif, sont parallèles et structurellement indépendants, mais peuvent être actionnés tous les deux au déverrouillage par un tirant (13) et au verrouillage par des ressorts (14, 15).

3. Dispositif selon la revendication 2, caractérisé en ce que le tirant précité (13) est muni d'un ergot ou analogue (18) d'accrochage sur le barillet (4) de la serrure (2) et est constamment sollicité, de même que les deux pênes précités (5, 6) par les ressorts précités (14, 15).

4. Dispositif selon l'une des revendications précédentes, caractérisé en ce que les deux pênes précités (5, 6) coulissent dans une pièce de guidage (7) solidaire du corps (3) de serrure et les ressorts (14) qui les sollicitent sont montés entre le tirant (13) et lesdits pênes qui comportent chacun une butée (9) de limitation de course coopérant avec le tirant (13).

## Patentansprüche

1. Vorrichtung zur Verriegelung und Entriegelung eines drehbaren Elementes (1), wie zum Beispiel einer Lenksäule eines Kraftfahrzeugs mit Hilfe eines zwei Riegel (5, 6) betätigenden Schlosses (2), die mit zu zwei kreisförmigen Reihen von in der Wandung des drehbaren Elementes (1) gebildeten Löchern (10, 11, 12 ; 20, 21) gehörenden Löchern zusammenwirken können, um das letztere in einer gegebenen Winkelstellung festzuhalten, dadurch gekennzeichnet, dass die besagten Löcher winkelmässig von einer Reihe zu der anderen versetzt sind, wobei die Löcher (20, 21) einer Reihe jeweils in Bezug auf die Löcher (10, 11, 12) der anderen Reihe um eine kreisförmige Achsabstands-Entfernung (d₁) versetzt sind, die der Hälfte derjenigen (d₂) von zwei aufeinanderfolgenden Löchern (10, 11) dieser anderen Reihe gleich ist.

2. Vorrichtung nach Anspruch 1, dadurch gekennzeichnet, dass die beiden vorgenannten Riegel (5, 6), die fähig sind, jeweils in ein Loch einer Reihe und in ein Loch der anderen Reihe bei Drehung des drehbaren Elementes einzurasten, parallel und gefügemässig unabhängig sind aber beide während der Entriegelung durch ein Zugglied (13) und während der Verriegelung durch Federn (14, 15) betätigt werden können.

3. Vorrichtung nach Anspruch 2, dadurch gekennzeichnet, dass das vorgenannte Zugglied (13) mit einem Ansatz oder dergleichen (18) zum Anhaken an dem Zylinder (4) des Schlosses (2) versehen ist und ständig so wie die beiden vorgenannten Riegel (5, 6) durch die vorgenannten Federn (14, 15) beaufschlagt wird.

4. Vorrichtung nach einem der vorangehenden Ansprüche, dadurch gekennzeichnet, dass die beiden vorgenannten Riegel (5, 6) in einem mit dem Schlosskörper (3) fest verbundenen Führungsstück (7) gleiten und die Federn (14), die diesselben beaufschlagen, zwischen dem Zugglied (13) und den besagten Riegeln, die jeweils einen mit dem Zugglied (13) zusammenwirkenden Hubbegrenzungsanschlag (9) aufweisen, angeordnet sind.

## Claims

1. Device for locking and unlocking a rotary element (1) such for example as a steering column of an automotive vehicle, with the assistance of a lock (2) actuating two bolts (5, 6) which may co-operate with holes, respectively, belonging to two circular rows of holes (10, 11, 12 ; 20, 21) formed in the wall of the rotary element (1) to allow the blocking of the latter in a given angular position, characterized in that the said holes are angularly offset from one row to the other one, the holes (20, 21) of one row being offset with respect to the holes (10, 11, 12), respectively, of the other row by a circumferential distance between axes (d₁) equal to one half of that (d₂) of two successive holes (10, 11) of this other row.

2. Device according to claim 1, characterized in that both of aforesaid bolts (5, 6) capable of snapping into one hole of a row and into one hole of the other row, respectively, upon the rotation of the rotary element are parallel and structurally independent but may both of them be operated during unlocking by a draw member (13) and during locking by springs (14, 15).

3. Device according to claim 2, characterized in that the aforesaid draw member (13) is provided with a snug or alike (18) for hooking onto the cylinder (4) of the lock (2) and is constantly acted upon as well as both bolts (5, 6) by the aforesaid springs (14, 15).

4. Device according to one of the foregoing claims, characterized in that both aforesaid bolts (5, 6) are sliding in a guide element (7) made fast to the lock body (3) and of the springs (14) which are acting upon them are mounted between the draw member (13) and the said bolts which comprise each one a stroke-limiting stop (9) co-operating with the draw member (13).
